# EUROPEAN PATENT APPLICATION

(11) **EP 2 146 322 A1**
(43) Date of publication of application: **20.01.2010**
(21) Application number: 09165366.7
(22) Date of filing: 14.07.2009
(51) Int. Cl.: G06T 11/00, G06T 13/00, G06T 15/00

(54) **Method and apparatus for producing animation**

(30) Priority: 14.07.2008 KR 20080068361; 17.04.2009 KR 20090033635
(71) Applicant: Samsung Electronics Co., Ltd., Suwon-si, Gyeonggi-do 442-742 (KR)
(72) Inventor: Kang, Bo-gyeong, Gyeonggi-do (KR); Shim, Hyun-ju, Gyeonggi-do (KR); Song, Seung-eun, Gyeonggi-do (KR); Kwag, Kyung-soo, Gyeonggi-do (KR); You, Yeong-mok, Gyeonggi-do (KR)
(74) Representative: D'Halleweyn, Nele Veerle Trees Gertrudis

(57) **Abstract**

Provided are a method and apparatus for interactively producing an animation. A user-level contents, for producing an animation, may be queried for and received from a user, and a video script representing the animation may be created by using the user-level contents based on regulation information and animation direction knowledge. An image of the animation may then be output by the playing the video script.

## Description

### FIELD OF THE INVENTION

One or more embodiments relate to a method and apparatus for interactively producing an animation, and more particularly, to a method and apparatus for interactively producing an animation in an animation script language according to inputs and selected directing styles of a user.

### BACKGROUND OF THE INVENTION

Recently, various video editing tools such as Adobe Flash and Adobe Premiere has been released. These video editing tools require that the producer understands the meaning of contents based on text, produces media contents corresponding to the text contents, and thus creates the video by editing media contents. Meanwhile, video editing tools based on a video script also have been released. A representative example of the video editing tools based on a video script is a television program making language (TVML) of Nippon Hoso Kyokai (NHK) and a video producer needs to understand and be able to create the video script that is a sort of a computer programming language, in order to produce a video image.

### SUMMARY

One or more embodiments relate to a script language-based 3D animation production, and more particularly, to a method and apparatus for producing a corresponding animation in an animation script language according to inputs and selected directing styles of a user.

One or more embodiments include a method and apparatus for producing an animation, which allow a user to easily produce a specialist-level animation even when the user does not have professional knowledge regarding an animation direction or does not know a corresponding video script language.

In one or more embodiments, the user may create an animation script in which camera works, sound effects, characters, lightings, drawings, etc., are directed in real time, by using an interface and an automatic direction engine and without a need for professional knowledge on animations, direction methods, and script languages. According to one or more embodiments, the user may further check a 3D animation by playing the created animation script through a script player.

To achieve the above and/or other aspects, one or more embodiments may include a method of interactively producing an animation, the method including analyzing received user-level contents classifying the received user-level contents, creating a video script representing the animation based on an application of regulated information of animation direction knowledge to the user-level contents, where the regulated information is selected from available regulated information based on the analyzing of the received user-level contents, and storing the video script.

To achieve the above and/or other aspects, one or more embodiments may include an apparatus for interactively producing an animation, the apparatus including an automatic directing engine analyzing received user-level contents, classifying the received user-level contents, and creating and storing a video script representing the animation based on an application of regulated information of animation direction knowledge to the user-level contents, where the regulated information is selected from available regulated information based on the analyzing of the received user-level contents.

According to an aspect of the present invention, a method of interactively producing an animation is disclosed, the method comprising:
analyzing received user-level contents classifying the received user-level contents;
creating a video script representing the animation based on an application of regulated information of animation direction knowledge to the user-level contents, where the regulated information is selected from available regulated information based on the analyzing of the received user-level contents; and
storing the video script.

The creating of the video script can comprise:
determining conditions of direction elements to be made to correspond to the regulated information based on the analyzing of the user-level contents;
determining one or more direction rules from among direction rules comprised in the regulated information based on the determined conditions; and
creating a direction outcome of the animation according to the determined one or more direction rules.

The classifying of the user-level contents can comprise classifying the user level contents into direction units which are minimum units operating as motives or as information for directing a user desired animation, and
can be such that the determining of the conditions comprises determining conditions of direction elements corresponding to each direction unit by making the direction units correspond to a classification system of the direction elements forming the animation direction knowledge.

According to embodiments of the present invention the method can be such that
it further comprises creating ad-libs of the direction elements corresponding to each direction unit based on the analyzing of the user-level contents, and that the ad-libs are not defined in the user-level contents.

According to embodiments of the present invention the method can be such that
it further comprises determining conditions of detailed direction elements based on the analyzing of the user-level contents regarding a dialog in consideration of characteristics of various direction fields of the animation with respect to the determined conditions, and
such that the determining of the one or more direction rules comprises determining one or more direction rules corresponding to the conditions of the detailed direction elements.

According to embodiments of the present invention the method can comprise determining a direction restriction of the animation in an environment of the animation, which is set according to the user-level contents, and
can be such that the determining of the one or more direction rules comprises selecting a direction rule after excluding the determined direction restriction from the determined one or more direction rules.

According to embodiments of the present invention the method can be such that
it further comprises, upon a plurality of direction rules being selected for application against the user-level contents, selecting one of the plurality of the direction rules for application against the user-level contents according to predetermined priorities among the plurality of the direction rules.

According to embodiments of the present invention the method can be such that determining of the one or more direction rules comprises determining, in application against the user-level contents, one of a style rule, a case-based rule, and a general rule, from the regulated information, as a direction rule, wherein the case-based rule represents a case where a corresponding style is not defined.

According to embodiments of the present invention the method can be such that
the user-level contents comprise information required to select a media element for defining the animation from among a plurality of media elements for defining animations, in a user interface.

According to embodiments of the present invention the method can further comprises requesting the user-level contents from the user based on a user selected template, of plural selectable templates with respective non-defined user-level contents,
wherein the received user-level contents comprise at least one of a dialog, a media style, and a screenshot of the animation, as provided by the user based on the user selected template.

According to embodiments of the present invention the method can further comprise outputting an image of the animation by playing the video script.

According to a further aspect of the present invention, a computer readable recording medium is disclosed comprising a computer readable code to control at least one processing device to implement a method of interactively producing an animation, the method comprising:
analyzing received user-level contents and classifying the received user-level contents;
creating a video script representing the animation based on an application of regulated information of animation direction knowledge to the user-level contents, where the regulated information is selected from available regulated information based on the analyzing of the received user-level contents; and
storing the video script.

According to a further aspect of the present invention, an apparatus for interactively producing an animation is disclosed, the apparatus comprising:
an automatic directing engine analyzing received user-level contents, classifying the received user-level contents, and creating and storing a video script representing the animation based on an application of regulated information of animation direction knowledge to the user-level contents, where the regulated information is selected from available regulated information based on the analyzing of the received user-level contents.

The apparatus can further comprise a user interface to input the received user-level contents for the automatic direction engine for producing the animation.

According to embodiments of the present invention, the automatic directing engine determines conditions of direction elements to be made to correspond to the regulated information based on the analyzing of the user-level contents, determines one or more direction rules from among direction rules comprised in the regulated information based on the determined conditions, and creates a direction outcome of the animation according to the determined one or more direction rules.

According to embodiments of the present invention, the user-level contents comprise information required to select a media element for defining the animation from among a plurality of media elements for defining animations in a user interface.

According to embodiments of the present invention, the user-level contents from the user are in response to a query from the apparatus based upon receipt by the user of a user selected template, of plural selectable templates with respective non-defined user-level contents, wherein the received user-level contents comprise at least one of a dialog, a media style, and a screenshot of the animation, as provided by the user based on the user selected template.

According to embodiments of the present invention, the apparatus further comprises a player outputting an image of the animation by playing the video script.

Additional aspects and/or advantages will be set forth in part in the description which follows and, in part, will be apparent from the description, or may be learned by practice of the invention.

### BRIEF DESCRIPTION OF THE DRAWINGS

These and/or other aspects and advantages will become apparent and more readily appreciated from the following description of the embodiments, taken in conjunction with the accompanying drawings of which:
FIG. 1 illustrates an apparatus for interactively producing an animation, according to one or more embodiments;
FIG. 2 illustrates various templates of a user interface, such as illustrated in FIG. 1, according to one or more embodiments;
FIG. 3 illustrates an automatic direction engine, such as illustrated in FIG. 1, according to one or more embodiments;
FIG. 4 illustrates data flows in an automatic direction engine, such as illustrated in FIG. 1, according to one or more embodiments;
FIG. 5 illustrates a classification system of direction elements of a virtual direction unit, such as illustrated in FIGS. 3 and 4, according to one or more embodiments;
FIG. 6 illustrates a table showing conditions to be determined by a camera director, such as illustrated in FIGS. 3 and 4, according to one or more embodiments;
FIG. 7 illustrates a table showing a list of camera work rules to be determined by a camera director, such as illustrated in FIGS. 3 and 4, according to one or more embodiments;
FIG. 8 illustrates a method of interactively producing an animation, according to one or more embodiments; and
FIG. 9 illustrates a data flow diagram of a method of generating a video script, according to one or more embodiments.

### DETAILED DESCRIPTION OF EMBODIMENTS

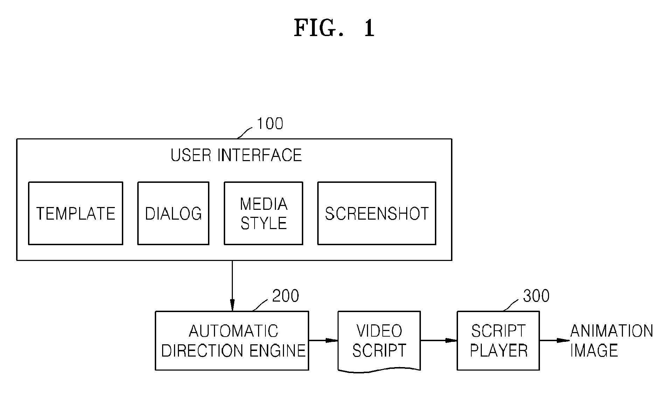

Reference will now be made in detail to embodiments, examples of which are illustrated in the accompanying drawings, wherein like reference numerals refer to like elements throughout. In this regard, embodiments of the present invention may be embodied in many different forms and should not be construed as being limited to embodiments set forth herein. Accordingly, embodiments are merely described below, by referring to the figures, to explain aspects of the present invention.FIG. 1 illustrates an apparatus for automatically producing an animation, according to one or more embodiments. Herein, throughout the following description, the term apparatus should be considered synonymous with elements of a physical system, not limited to a single enclosure or all described elements embodied in single respective enclosures in all embodiments, but rather, depending on embodiment, is open to being embodied together or separately in differing enclosures and/or locations through differing elements. As only another example, a respective apparatus/system or method could also be controlled through one or more processing elements/devices or implemented by a distributed network, noting that additional and alternative embodiments are equally available.

Referring to FIG. 1, the apparatus may include a user interface 100, an automatic direction engine 200, and a script player 300, for example. One of ordinary skill in the art may understand that the animation may also include a real video image.

The user interface 100 receives user-level contents for producing the animation from a user. Here, the user-level contents are contents not requiring professional directorial knowledge regarding animation production, and only requires general knowledge required to, for example, read and write text, as the user interface 100 may interact with the user to request and obtain select different information. Here, the user-level contents may include information required to select some media elements for defining a user desired animation from among a plurality of media elements for defining animations in the user interface 100. For example, the user may click icons for defining the desired animation from among icons separately corresponding to the media elements in the user interface 100 that is implemented in the form of a web page.

As shown in FIG. 1, the user interface 100 receives from the user contents corresponding to a template type, a dialog, a media style, and a screenshot. However, one of ordinary skill in the art may understand that the user interface 100 may also receive contents corresponding to additional and/or other types of media elements.

The user interface 100 may receive from the user information for selecting one of various types of templates defining input formats in the user interface 100. Here, the templates may be, for example, writing types from the user's point of view.

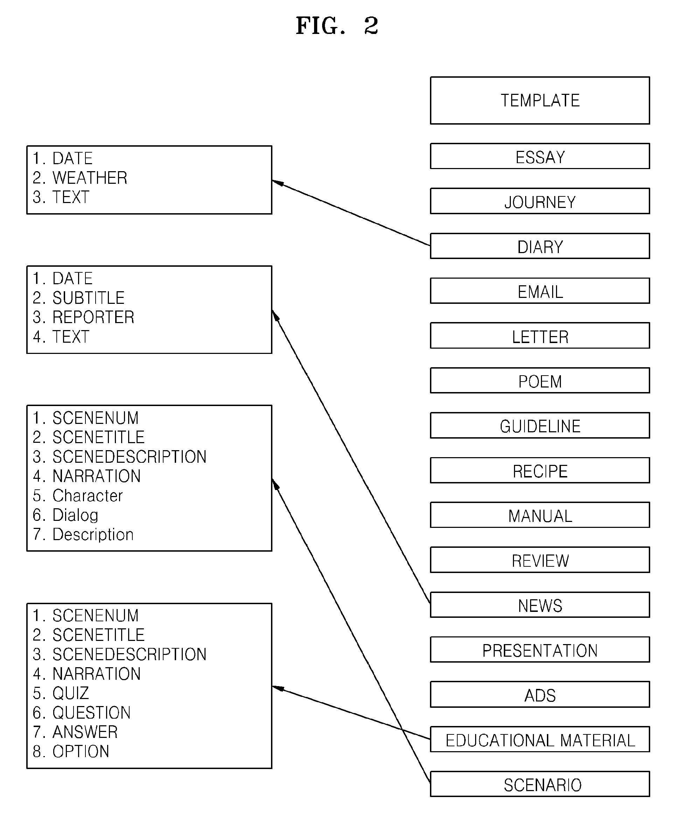

FIG. 2 illustrates various templates of a user interface, described below through the user interface 100 illustrated in FIG. 1, according to one or more embodiments.

Referring to FIG. 2, examples of the templates of the user interface 100 are essay, journey, diary, email, letter, poem, guideline, recipe, manual, review, news, presentation, advertisements (ads), educational material, and scenario, noting that alternate and/or additional templates are available.

For example, if a user selects the diary template from the user interface 100, an input format of the user interface 100 may include date, weather, and text items. Also, if the user selects the scenario template from the user interface 100, the input format of the user interface 100 may include scene number, scene title, scene description, narration, character, dialog, and description items. Here, the example text item may be input several times and the description item may be dependent on the character item and the dialog item.

Referring back to FIG. 1, the user interface 100 may receive from the user the user-level contents regarding, for example, a dialog, a media style, and a screenshot of the animation through a template determined according to input information of the user. For example, the user may input the dialog on a text input interface included in the template of the user interface 100, or may select the media style by clicking an icon of a menu bar of the form of a graphic user interface (GUI).

The user-level contents regarding the dialog may include, for example, information required to select a character of the desired animation from among animation characters supported by a template determined by the automatic direction engine 200, dialogs of the character made by the user, commands representing actions and emotions of the character, and media clips (e.g., video, music, and photo clips) input from the user.

The user-level contents regarding the media style are information required to select a style of the desired animation from among various media styles supported by the template determined by the automatic direction engine 200, and may include, for example, information required to select a genre, a scene, an atmosphere, a background time, etc., of the animation, and information required to select a characteristic of the character of the animation. As only an example, within the media styles there may be cultural configurations such as based on nationality and languages, or cultural sensitivities or expectations. The dictionaries may have different categories according to the regions where the animation is produced and/or to be distributed.

The user-level contents regarding the screenshot include, for example, information required to select a background of the desired animation from among various backgrounds supported by the template determined by the automatic direction engine 200, and information required to select a location of the character in the selected background.

Meanwhile, contents regarding the dialog, the media style, and the screenshot may include contents included in the automatic direction engine 200, in addition to the user-level contents. In particular, the contents regarding the media style may include various media resources (e.g., video, music, and photo resources) representing media styles of animations. The media resources may include the media clips input from the user.

In the aforementioned conventional video editing tools such as Adobe Flash™ and Adobe Premiere™, the user has to learn how to use a corresponding program and has to obtain a lot of direction knowledge regarding cameras, lighting, characters, sound, etc. in order to produce a desired video image. However, here, only the above-described user-level contents, in combination with the below explained features, may be required to produce the animation. Thus, the user does not have to learn how to use the video editing tools and does not need to obtain professional directorial knowledge.

The automatic directing engine 200 subsequently creates a video script representing the animation by using the user-level contents input through the user interface 100 based on information generated by regulating animation directorial/direction knowledge, i.e., regulated information of animation direction knowledge. Here, representative examples of the animation direction knowledge include information on camera works and lighting, as well as additional information on ad-libs, sound effects, and drawing effects, which may generally be determined by animation direction specialists with respect to each scene of the animation. That is, the regulated information of the animation direction knowledge means information obtained by standardizing the above-mentioned animation direction knowledge into a plurality of rules and converting the rules into computer readable data. The regulated information may be created in the form of an extensible markup language (XML) document or a database. In particular, the regulated information may be designed to be easily modified or added by the user.

In more detail, the automatic directing engine 200 creates the video script, i.e., in the script language, by analyzing the aforementioned diverse user-level contents input through the user interface 100 and applying the regulated information of the animation direction knowledge to an analysis result.

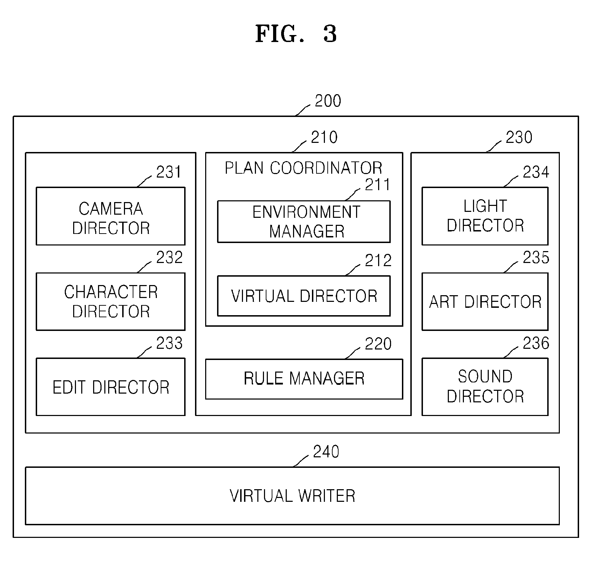

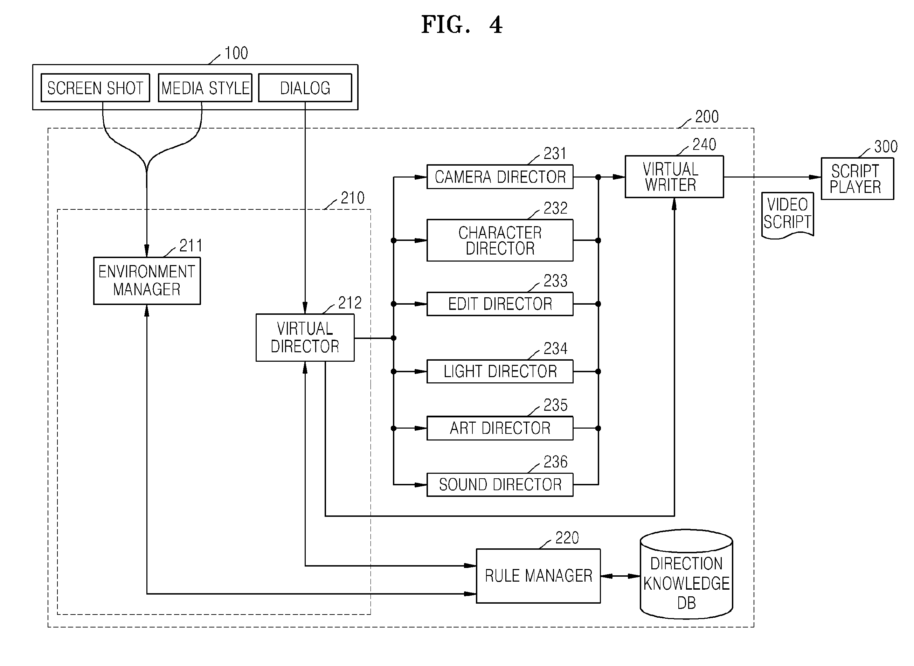

FIG. 3 illustrates an automatic direction engine, described below through the automatic direction engine 200 illustrated in FIG. 1, according to one or more embodiments. FIG. 4 illustrates data flows in an automatic direction engine, again described below through the automatic direction engine 200 illustrated in FIG. 1, according to one or more embodiments. Accordingly, FIGS. 3 and 4 will be described in conjunction with FIG. 1.

Referring to FIGS. 3 and 4, the automatic direction engine 200 may include a planning coordinator 210, a rule manager 220, a director 230, and a virtual writer 240.

The planning coordinator 210 determines conditions of direction elements, which may correspond to regulation information based on animation direction knowledge by analyzing user-level contents regarding a dialog of an animation based on the user-level contents regarding a media style, in addition to user-level contents regarding a screenshot of the animation. The planning coordinator 210 includes an environment manager 211 and a virtual director 212.

The environment manager 211 sets an environment of the animation according to the user-level contents regarding the media style and the screenshot, which are input through the user interface 100, determines a direction restriction of the animation in the environment and an appropriate media resource for the environment, and outputs the set environment, the direction restriction and the appropriate media resource to each of a plurality of sub-directors of the director 230. For example, if information on a background time of the animation which is included in the user-level contents indicates evening, the environment manager 211 sets the environment of the animation to be dark, and determines sunlight as the direction restriction and a sunset image as the appropriate media resource.

The virtual director 212 may classify the user-level contents regarding the dialog, which are input through the user interface 100, into direction units which are minimum units operating as motives or as information for directing a user desired animation, determine the conditions of the direction elements corresponding to each of the classified direction units by making each direction unit correspond to a classification system of the direction elements forming animation direction knowledge, and output a determination result to each sub-director of the director 230, together with the user-level contents regarding the dialog.

Also, the virtual director 212 may create ad-libs of the direction elements corresponding to each direction unit by analyzing the user-level contents regarding the dialog. For example, a direction unit of the user-level contents regarding the dialog corresponds to a case where a certain character gives permission, an ad-lib indicating that the character nods is created.

Here, such ad-libs could include the creation of a character nodding his head when giving permission to another character, or when receiving a command, for example. The ad-libs may further be based upon a predetermined dictionary of available actions, as well as a predetermined dictionary for the addition of auditory ad-lib responses or queries. As an example, the predetermined action dictionary may identify available actions and may also have appropriate meta-data according to category, e.g., head motion, upper motion, loco motion, hand gesture, etc. These dictionaries may be embodied as a single dictionary or several dictionaries, e.g., based on such categories, and may be wholly or singularly updated, depending on embodiment. Ad-libs may not be required to imply any specific meaning, but may play role of making selected action richer based upon the user input content information. Such ad-libs could also be anticipatory. For example, an ad-lib action or statement for a listener could be created before a listener's defined answer, even for output while the speaker is speaking. Such ad-libs could also be used for defining additional or alternate ad-libs.

In addition, similar to the above discussion regarding media-styles, the ad-lib dictionaries may have cultural configurations such as based on nationality and languages, or cultural sensitivities or expectations. The dictionaries may have different categories according to the regions where the animation is produced and/or to be distributed. Such cultural, sensitivity, expectation, or regional differences may be incorporated into additional aspects of the present invention in addition to the aforementioned media style and the ad-lib dictionaries. Lastly, though ad-libs have been discussed with regard to actions or auditory responses additional and/or alternate ad-libs may be available for similarly interpreting the user input content and adding to, or subtracting from, the same.

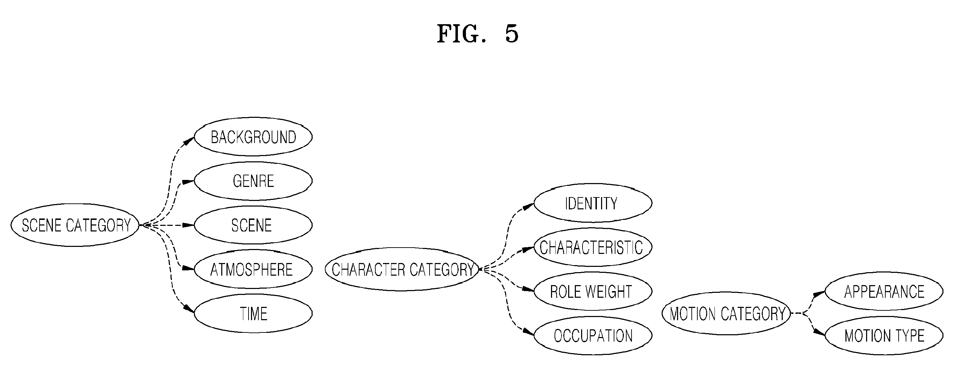

FIG. 5 illustrates a classification system of direction elements of a virtual direction unit, described below through the virtual direction unit 212 illustrated in FIGS. 3 and 4, according to one or more embodiments.

Referring to FIG. 5, the direction elements are mainly classified into a scene category, a character category, and a motion category. One of ordinary skill in the art may understand that other categories may be added to the above categories.

The scene category is re-classified into classes such as background (e.g., a seashore, an open space, etc.), genre (e.g., a movie, a talk show, etc.), scene (e.g., a conversation, a chase, etc.), atmosphere (e.g., a horrible atmosphere, a romantic atmosphere, etc.), and background time (e.g., morning, evening, etc.). The character category is re-classified into classes such as identity (e.g., a man, a woman, etc.), characteristic (e.g., extrospective, introspective, etc.), role weight (e.g., a leading role, a supporting role, etc.), and occupation (e.g., an office worker, a doctor, a police, etc.). The motion category is re-classified into classes such as appearance (e.g., a head, an upper body, a lower body, a full body, etc.) and motion type (e.g., standalone motion, interactive motion among characters, interactive motion between characters and props, etc).

For example, if a direction unit of user-level contents regarding a dialog, which is input through the user interface 100 illustrated in FIG. 1 indicates a conversation between a man and a woman at a seashore, conditions of direction elements representing a seashore, a movie, a conversation, a romantic atmosphere, and an evening in the scene category, a man character, a woman character, and an introspective characteristic in the character category, and a full body and a body motion in the motion category, may be determined.

Referring back to FIGS. 3 and 4, the director 230 determines one or more direction rules from among direction rules included in the regulated information of the animation direction knowledge, based on the conditions determined by the planning coordinator 210, and creates a direction outcome of the desired animation of the user according to the determined direction rule. However, the determining of the one or more direction rules may be performed by the director 230 or the rule manager 220. If the determining of the one or more direction rules is performed by the rule manager 220, the director 230 requests the rule manager 220 to determine the one or more direction rules from among the direction rules included in the regulated information of the animation direction knowledge, obtains direction rules from the rule manager 220 as a response, and creates the direction outcome of the user desired animation according to the obtained direction rules. Here, the direction outcome means the direction rules that are converted into data in the form of, for example, an XML document.

In more detail, the director 230 may determine conditions of detailed direction elements by analyzing the user-level contents regarding the dialog, which are output from the virtual director 212, in consideration of characteristics of various direction fields of the animation with respect to the conditions of the direction elements corresponding to each direction unit output from the virtual director 212, and determines the one or more direction rules corresponding to the determined conditions, from among the direction rules included in the regulated information of the animation direction knowledge. Also, the director 230 may exclude a direction rule corresponding to the direction restriction input from the environment manager 211 and select a direction rule corresponding to the appropriate media resource determined by the environment manager 211, from among the determined direction rules. If a plurality of direction rules correspond to the appropriate media resource determined by the environment manager 211, the director 230 may select one of the direction rules according to predetermined priorities among the direction rules.

The director 230 includes sub-directors such as a camera director 231, a character director 232, an editing director 233, a lighting director 234, an art director 235, and a sound director 236. However, one of ordinary skill in the art may understand that the director 230 may further include additional and/or alternate sub-directors which may perform different functions. The camera director 231 determines conditions of detailed direction elements by analyzing the user-level contents regarding the dialog, which are output from the virtual director 212, in consideration of characteristics of a camera direction field with respect to the conditions of the direction elements corresponding to each direction unit output from the virtual director 212.

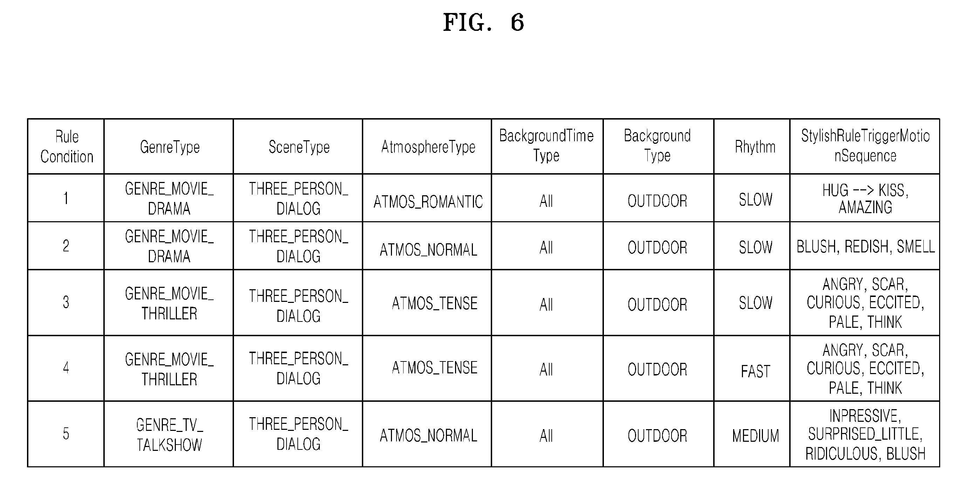

FIG. 6 illustrates a table showing conditions to be determined by a camera director, described below through the camera director 231 illustrated in FIGS. 3 and 4, according to one or more embodiments.

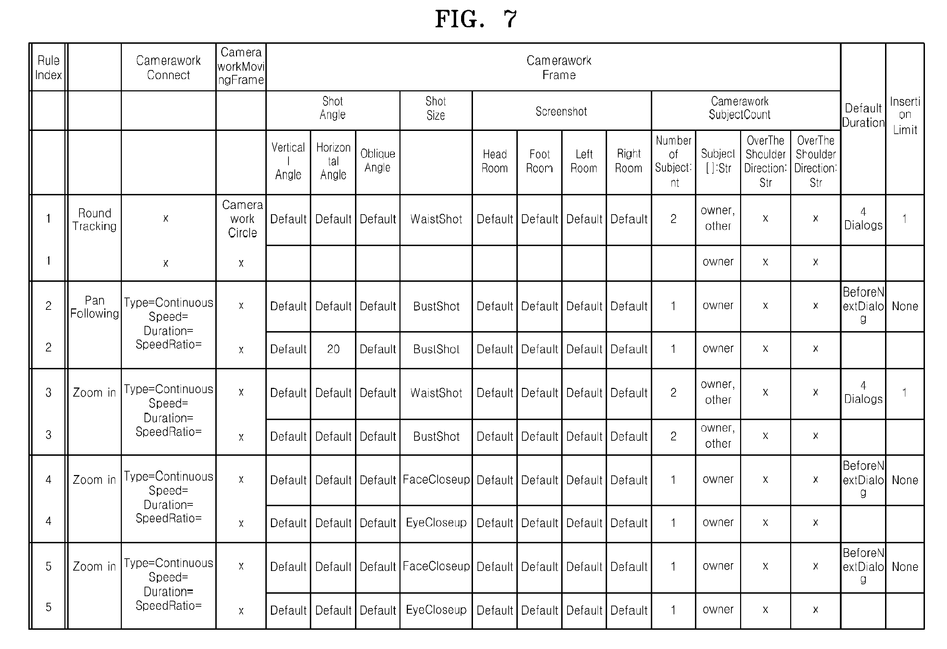

Referring to FIG. 6, the camera director 231 checks whether a certain direction unit output from the virtual director 212 illustrated in FIGS. 3 and 4 is a sequence from which direction rules regarding a camera can be triggered, based on conditions of direction elements corresponding to the direction unit, so as to apply camera work rules shown in FIG. 7. Here, the conditions may include a genre type, a scene type, an atmosphere type, a background time type, and a background type.

For example, the conditions of the direction elements corresponding to the direction unit output from the virtual director 212 indicate a motion sequence of a hug, a kiss, and touching in an environment of a drama, a conversation among three people, a romantic atmosphere, an outdoor background, and a slow rhythm, the camera director 231 determines a condition of the direction unit as a value "1". The camera director 231 checks whether a condition of a subsequent direction unit of the direction unit can be determined as another value that is not the value "1". If the condition of the subsequent direction unit can be determined as another value, the camera director 231 triggers the condition.

FIG. 7 illustrates a table showing a list of camera work rules to be determined by a camera director, described below through the camera director 231 illustrated in FIGS. 3 and 4, according to one or more embodiments.

Referring to FIG. 7, the camera director 231 determines a direction rule corresponding to a condition of a direction unit, i.e., a value 1, which is determined as described above with reference to FIG. 6. In FIG. 7, the direction rule corresponding to the value "1" indicates a round tracking effect. The camera director 231 creates a camera direction outcome of a user desired animation by converting the direction rule corresponding to the round tracking effect into data in the form of, for example, an XML document. In particular, the direction rule corresponding to the value "1" includes information on a shot angle, a shot size, a shot room, etc. of a camera for representing the round tracking effect.

Referring back to FIGS. 3 and 4, the character director 232 may determine conditions of detailed direction elements by analyzing the user-level contents regarding the dialog, which are output from the virtual director 212, in consideration of characteristics of a character direction field with respect to the conditions of the direction elements corresponding to each direction unit output from the virtual director 212. The editing director 233 may determine conditions of detailed direction elements by analyzing the user-level contents regarding the dialog, which are output from the virtual director 212, in consideration of characteristics of an editing direction field with respect to the conditions of the direction elements corresponding to each direction unit output from the virtual director 212. The lighting director 234 may determine conditions of detailed direction elements by analyzing the user-level contents regarding the dialog, which are output from the virtual director 212, in consideration of characteristics of a light direction field with respect to the conditions of the direction elements corresponding to each direction unit output from the virtual director 212.

The art director 235 may determine conditions of detailed direction elements by analyzing the user-level contents regarding the dialog, which are output from the virtual director 212, in consideration of characteristics of an art direction field with respect to the conditions of the direction elements corresponding to each direction unit output from the virtual director 212. In general, art means graphic text, image and their movement type shown on 3D space or screen. For example, according to conditions, the art director 235 may determine insert timing, insert location, graphic font and size of special caption shown on screen. The sound director 236 may determine conditions of detailed direction elements by analyzing the user-level contents regarding the dialog, which are output from the virtual director 212, in consideration of characteristics of a sound direction field with respect to the conditions of the direction elements corresponding to each direction unit output from the virtual director 212.

The rule manager 220 may determine the one or more direction rules from among the direction rules included in the regulated information of the animation direction knowledge, based on the conditions determined by the planning coordinator 210 according to a request of the director 230, and output a determination result to the director 230. In more detail, the rule manager 220 may determine the one or more direction rules from among the direction rules included in the regulated information of the animation direction knowledge, based on the detailed conditions determined by the sub-directors of the director 230 according to requests of the sub-directors, and outputs a determination result to the director 230.

According to the current embodiment, the regulated information of the animation direction knowledge is formed of, for example, general rules, style rules, and case-based rules. The general rules mean general direction techniques which have been used to most naturally represent animation images, and include, for example, a 180° rule and a screen composition setting rule. The style rules are a database of clichés meaning typical direction techniques which have been used to achieve certain direction effects desired by users, and include, for example, a camera work using a circular track, which represents emotions of two people in a romantic atmosphere.

The rule manager 220 checks whether a style rule corresponding to the conditions of the detailed direction elements, which are determined by the sub-directors, exists from among the direction rules included in the regulated information of the animation direction knowledge. If the style rule corresponding to the conditions of the detailed direction elements exists, the rule manager 220 outputs the style rule to the sub-directors. If the style rule corresponding to the conditions of the detailed direction elements does not exist, the rule manager 220 determines a case-based rule corresponding to the conditions of the detailed direction elements, which are determined by the sub-directors, from among the direction rules included in the regulated information of the animation direction knowledge, and outputs the case-based rule to the sub-directors. In particular, the rule manager 220 checks whether the style rule or the case-based rule violates a general rule corresponding to the conditions of the detailed direction elements, which are determined by the sub-directors. The style rule or the case-based rule may be output to the sub-directors only if the style rule or the case-based rule does not violate the general rule. For example, if the style rule or the case-based rule violates the general rule, the general rule is output to the sub-directors.

Some of the general rules, the style rules, and the case-based rules may be included in each sub-director. In particular, the general rules are hardly changed and thus may be stored in each sub-director in the form of program codes. As such, communication between the rule manager 220 and each sub-director may be reduced and thus a process efficiency of a system may be improved. Also, the rule manager 220 may include a classification system of the direction elements as well as the regulated information of the animation direction knowledge. In this case, the planning coordinator 210 may request the rule manager 220 to determine the conditions of the direction elements corresponding to each direction unit, the rule manager 220 may determine the conditions of the direction elements corresponding to each direction unit by corresponding each direction unit to the classification system of the direction elements forming the animation direction knowledge, and output a determination result to the planning coordinator 210. Here, storage such rules, including the general rules, the style rules, and the case of the based rules may be configured for modifications, such as through updates, or through a learning of extracted rules from differing created animation. The system may further implement such modifications or updates. Further, though the general rules are typically well defined and may not change, they may still be modifiable, in addition to any modifications of the styles or case-based rules. Corresponding updates could derive from product providers, directorial experts, or users.

The virtual writer 240 may then create a video script representing the user desired animation by writing the direction outcome created by the director 230 and the ad-libs created by the virtual director 212 in the XML language, i.e., in XML grammar. In more detail, the virtual writer 240 may create the video script representing the user desired animation by combining sub-direction outcomes created by the sub-directors of the director 230 so as to be temporally synchronized and writing the combined sub-direction outcomes according to the XML grammar. However, some functions of the virtual writer 240 may be performed by the planning coordinator 210.

The script player 300 outputs an image of the animation by playing the video script created by the automatic directing engine 200. As described above, based on diverse input, the video script is automatically created by the automatic directing engine 200. Thus, professional knowledge for writing the video script may not be required and anyone having general knowledge required to, for example, read and write text, may produce an animation according to the above embodiment. In particular, due to a small capacity and easy modification characteristics, an animation script may be easily shared with other users and may be easily applied to cooperative production among a plurality of people. Previously created scripts may equally be reloaded and the content of the same modified. Further, based on consistency requirements being met, e.g., appropriate character casting, stage, and style, embodiments may include the combination or merging of animation created from different users. Likewise, if different users are working on different scenes, the two generated scripts may be equally merged to create a single script.

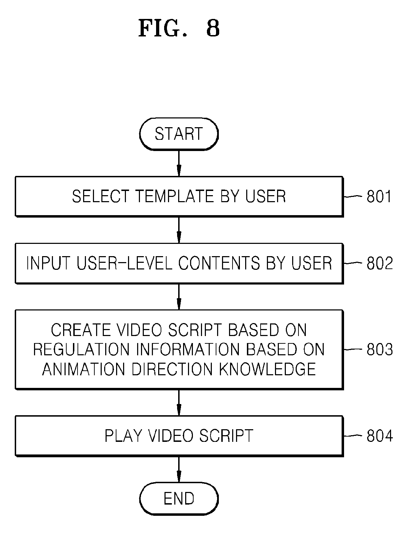

FIG. 8 illustrates a method of interactively producing an animation, according to one or more embodiments. As only one example, such an embodiment may correspond to example sequential processes of the example apparatus illustrated in FIG. 1, but is not limited thereto and alternate embodiments are equally available.

In operation 801, user information selection of one of various types of templates defining input formats may be queried for and received, e.g., by the aforementioned user interface 100.

In operation 802, in addition, a user may be queried for and provide user user-level contents regarding, for example, a dialog, a media style, and a screenshot of the animation through a template determined according to input information of the user.

In operation 803, a video script may the be created representing the animation by using the user-level contents input in operation 802 and based on regulation information based on animation direction knowledge.

In operation 804, an image of the animation may then be output by playing the created video script. Operation 804 may store the video script, either in non-volatile memory or volatile memory, for example.

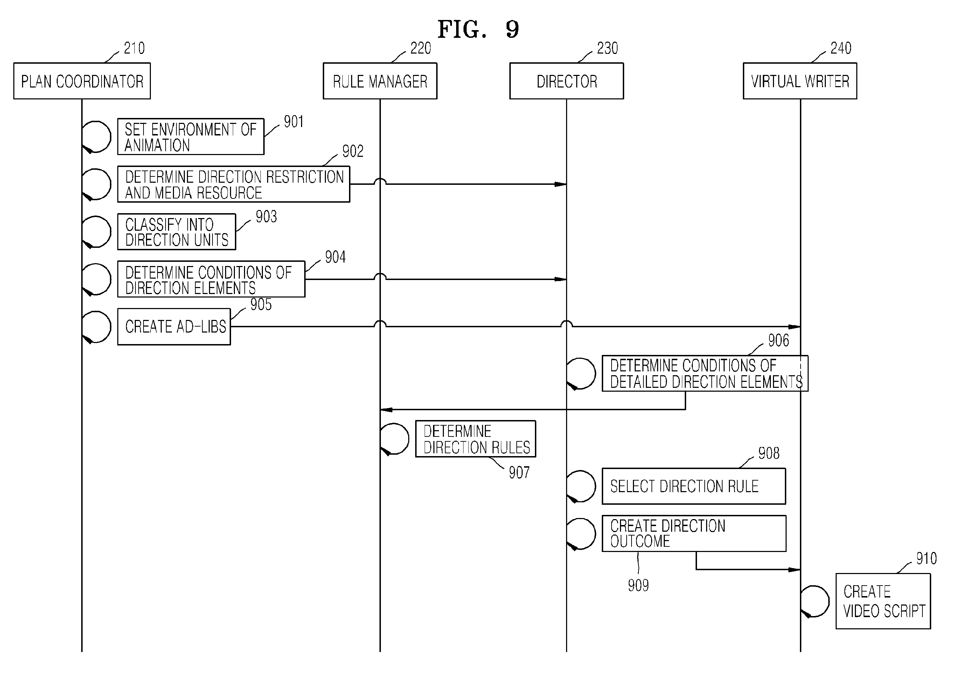

FIG. 9 illustrates a data flow diagram of operation 803 illustrated in FIG. 8, according to one or more embodiments.

In operation 901, an environment of an animation may be set, such as by the aforementioned planning coordinator 210, according to user-level contents regarding a user queried and input media style and screenshot.

In operation 902, a direction restriction of the animation in the environment and an appropriate media resource for the environment may be determined.

In operation 903, the user-level contents may be categorized regarding a user provided dialog into direction units which are minimum units operating as motives or as information for directing a user desired animation.

In operation 904, conditions of direction elements corresponding to each of the classified direction units may be determined by making each direction unit correspond to a classification system of the direction elements forming animation direction knowledge. As only an example, such an operation 904 may be performed by the aforementioned rule manager 220.

In operation 905, ad-libs of the direction elements corresponding to each direction unit may be created by analyzing the user-level contents regarding the dialog.

In operation 906, conditions of detailed direction elements may be determined, e.g., by the director 230, by analyzing the user-level contents regarding the dialog in consideration of characteristics of various direction fields of the animation with respect to the conditions determined in operation 904.

In operation 907, one or more direction rules, corresponding to the conditions determined in operation 906, may be determined, e.g., by the aforementioned rule manager 220, from among direction rules included in regulation information based on the animation direction knowledge. In more detail, such an operation may include determining whether a style rule corresponding to the conditions determined in operation 906 exists from among the direction rules included in the regulated information of the animation direction knowledge. If the style rule exists, the style rule may be determined from among the direction rules. If the style rule does not exist, a case-based rule, corresponding to the conditions determined in operation 906 may be determined, from among the direction rules. Then, the process may include determining whether the style rule or the case-based rule violates a general rule corresponding to the conditions determined in operation 906. In an embodiment, the corresponding style rule and case-based rule are determined from among the direction rules only if the respective style rule or case-based rule does not violate the general rule. In such a case, if the style rule or the case-based rule violates the general rule, only the general rule from among the direction rules may be utilized. As only an example, some or all of operation 907 may be performed by the aforementioned director 230.

In operation 908, a direction rule corresponding to the direction restriction determined in operation 902 may be excluded and a direction rule corresponding to the appropriate media resource determined in operation 902 may be selected, from among the direction rules determined in operation 907. If a plurality of direction rules are selected, only select direction rules may utilized according to predetermined priorities among the direction rules.

In operation 909, a direction outcome of the user desired animation may then be created according to the determined direction rule in operation 907 and selected in operation 908.

In operation 910, a video script representing the user desired animation may be created by writing the direction outcome created in operation 909 and the ad-libs created in operation 905 according to XML grammar.

As described above, according to the one or more of the above embodiments, even a user who does not have professional knowledge on animation direction or know a video script language may produce a specialist-level animation in which camera works, lighting, ad-libs, sound effects, drawing effects, etc., are directed in real time by automatically creating a video script representing an animation from user-level contents based on regulation information based on animation direction knowledge. In particular, for example, a video producer may check his or her animation in real time by playing the video script using a script player.

Embodiments of the present invention may be implemented in varying products and processes. Embodiments may be varying IT products including a digital appliance, such as a camera, camcorder, telephone, computer, portable data assistant, mobile device, etc. Likewise, such process could be equally implemented as stand-alone products or through varying levels of operation, such as through web-based interfaces or IPTV services and products. Whole to limited portions of the required elements may be required on any one device. Again, the aforementioned automatic direction engine may not rely on any specific device or platforms. For example, an embodiment may include the mentioned web-based approach. The embodiment may include an on-line editor for users to select and create user level contents, and then the output animation may be generated through direction engine either on a client-side home computer or a remote computer, such as a service provider server. Example applications could include greeting cards or any type of animation using online communication such as instant messaging and SMS, again noting that alternative and/or additional embodiments are equally available. In addition, as noted above, one or more of the general, style, or case-based rules may be updated in one or more embodiments, There may equally be updates of other regulated information including other rules and resources, such as 3D characters, stages, actions, media clips, etc.

In addition, other embodiments can also be implemented through computer readable code/instructions in/on a medium, e.g., a computer readable medium, to control at least one processing device to implement any above described embodiment. The medium can correspond to any defined, measurable, and tangible structure permitting the storage and/or transmission of the computer readable code.

Examples of computer-readable media include magnetic media such as hard disks, floppy disks, and magnetic tape; optical media such as CD ROM disks and DVDs; magnetooptical media such as optical disks; and hardware devices that are specially configured to store and perform program instructions, such as read-only memory (ROM), random access memory (RAM), flash memory, and the like. The media may also include, e.g., in combination with the computer readable code, data files, data structures, and the like. Examples of computer readable code include both machine code, such as produced by a compiler, and files containing higher level code that may be executed by the computer using an interpreter, for example. The media may also be a distributed network, so that the computer readable code is stored and executed in a distributed fashion. Still further, as only an example, the processing device could include a processor or a computer processor, and processing devices may be distributed and/or included in a single device.

While aspects of the present invention has been particularly shown and described with reference to differing embodiments thereof, it should be understood that these exemplary embodiments should be considered in a descriptive sense only and not for purposes of limitation. Descriptions of features or aspects within each embodiment should typically be considered as available for other similar features or aspects in the remaining embodiments.

Thus, although a few embodiments have been shown and described, with additional embodiments being equally available, it would be appreciated by those skilled in the art that changes may be made in these embodiments without departing from the principles and spirit of the invention, the scope of which is defined in the claims and their equivalents.

## Claims

1. A method of interactively producing an animation, the method comprising:
analyzing received user-level contents classifying the received user-level contents;
creating a video script representing the animation based on an application of regulated information of animation direction knowledge to the user-level contents, where the regulated information is selected from available regulated information based on the analyzing of the received user-level contents; and
storing the video script.

2. The method of claim 1, wherein the creating of the video script comprises:
determining conditions of direction elements to be made to correspond to the regulated information based on the analyzing of the user-level contents;
determining one or more direction rules from among direction rules comprised in the regulated information based on the determined conditions; and
creating a direction outcome of the animation according to the determined one or more direction rules.

3. The method of claim 2, wherein the classifying of the user-level contents comprises classifying the user level contents into direction units which are minimum units operating as motives or as information for directing a user desired animation, and
wherein the determining of the conditions comprises determining conditions of direction elements corresponding to each direction unit by making the direction units correspond to a classification system of the direction elements forming the animation direction knowledge.

4. The method of claim 3, further comprising creating ad-libs of the direction elements corresponding to each direction unit based on the analyzing of the user-level contents, wherein the ad-libs are not defined in the user-level contents.

5. The method of claim 2, further comprising determining conditions of detailed direction elements based on the analyzing of the user-level contents regarding a dialog in consideration of characteristics of various direction fields of the animation with respect to the determined conditions, and
wherein the determining of the one or more direction rules comprises determining one or more direction rules corresponding to the conditions of the detailed direction elements.

6. The method of claim 2, further comprising determining a direction restriction of the animation in an environment of the animation, which is set according to the user-level contents, and
wherein the determining of the one or more direction rules comprises selecting a direction rule after excluding the determined direction restriction from the determined one or more direction rules.

7. The method of claim 2, further comprising, upon a plurality of direction rules being selected for application against the user-level contents, selecting one of the plurality of the direction rules for application against the user-level contents according to predetermined priorities among the plurality of the direction rules.

8. The method of claim 2, wherein the determining of the one or more direction rules comprises determining, in application against the user-level contents, one of a style rule, a case-based rule, and a general rule, from the regulated information, as a direction rule, wherein the case-based rule represents a case where a corresponding style is not defined.

9. The method of claim 1, wherein the user-level contents comprise information required to select a media element for defining the animation from among a plurality of media elements for defining animations, in a user interface.

10. The method of claim 9, further comprising requesting the user-level contents from the user based on a user selected template, of plural selectable templates with respective non-defined user-level contents,
wherein the received user-level contents comprise at least one of a dialog, a media style, and a screenshot of the animation, as provided by the user based on the user selected template.

11. The method of clam 1, further comprising outputting an image of the animation by playing the video script.

12. A computer readable recording medium comprising a computer readable code to control at least one processing device to implement a method of interactively producing an animation, the method comprising:
analyzing received user-level contents and classifying the received user-level contents;
creating a video script representing the animation based on an application of regulated information of animation direction knowledge to the user-level contents, where the regulated information is selected from available regulated information based on the analyzing of the received user-level contents; and
storing the video script.

13. An apparatus for interactively producing an animation, the apparatus comprising:
an automatic directing engine analyzing received user-level contents, classifying the received user-level contents, and creating and storing a video script representing the animation based on an application of regulated information of animation direction knowledge to the user-level contents, where the regulated information is selected from available regulated information based on the analyzing of the received user-level contents.

14. The apparatus of claim 13, wherein the automatic directing engine determines conditions of direction elements to be made to correspond to the regulated information based on the analyzing of the user-level contents, determines one or more direction rules from among direction rules comprised in the regulated information based on the determined conditions, and creates a direction outcome of the animation according to the determined one or more direction rules.

15. The apparatus of claim 13, wherein the user-level contents comprise information required to select a media element for defining the animation from among a plurality of media elements for defining animations in a user interface.
